# EUROPEAN PATENT APPLICATION

(11) **EP 4 462 898 A1**
(43) Date of publication of application: **13.11.2024**
(21) Application number: 24160656.5
(22) Date of filing: 29.02.2024
(51) Int. Cl.: H04W 56/00, H04B 7/185, H04W 84/06

(54) **METHODS AND APPARATUSES FOR SIGNALLING TA ADJUSTMENT DURING RTT MEASUREMENT IN NON-TERRESTRIAL NETWORKS**

(30) Priority: 10.05.2023 GB 202306878
(71) Applicant: Nokia Technologies Oy, 02610 Espoo (FI)
(72) Inventor: WIGARD, Jeroen, 9270 Klarup (DK); FREDERIKSEN, Frank, 9270 Klarup (DK); JUAN, Enric, 9000 Aalborg (DK)
(74) Representative: Bryers Intellectual Property Ltd

(57) **Abstract**

Techniques for signalling TA adjustment during RTT measurement in non-terrestrial networks relayed connection between nodes are provided. For example, a method performed by a terminal node in a non-terrestrial network, comprises: performing a timing advance (TA) adjustment during a round trip time (RTT) measurement; and in response to the TA adjustment exceeding a threshold, providing, to a network node, an indication relating to the RTT measurement to indicate that the TA adjustment exceeds the threshold.

## Description

### TECHNICAL FIELD

Various example embodiments generally relate to a wireless communication technique. More specifically, measures/mechanisms (including methods, apparatuses and computer program products) are described for signalling TA adjustment during RTT measurement in non-terrestrial networks.

### BACKGROUND

Various example embodiments relate to considerations in a (e.g. mobile/wireless) communication system or network, such as a 5G/NR system and a next-generation system beyond 5G. For example, various example embodiments are applicable in a 3GPP-standardized mobile/wireless communication system or network of Release 18 onwards.

The feasibility of using 5G NR standards to support non-terrestrial networks (NTN) has been studied for Releases 15 and 16 of the 3GPP-standardized mobile/wireless communication system or network. Current studies assume that user equipment supporting NTN have Global Navigation Satellite System (GNSS) capability. In an NTN system, 5G base stations (gNBs) may be deployed on board of satellites and/or satellites may act as a kind of relay for ground-based gNBs to provide communication coverage over a very large area that may be otherwise unreachable by cellular networks. Such functionality can be used to connect Internet-of-Things (IoT) devices globally as well as provide personal communication in remote areas and in disaster relief.

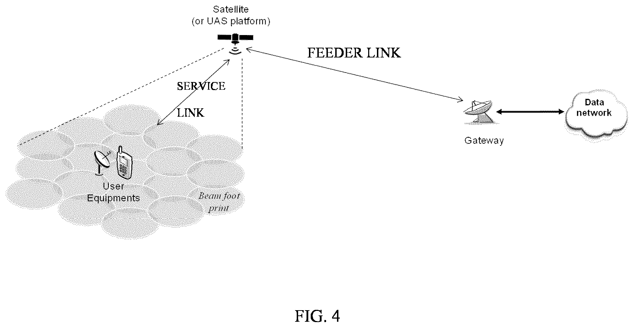

An example NTN scenario is illustrated in FIG. 4. According to this NTN scenario, user equipments are provided with services of a data network via a service link from a satellite or an unmanned aerial system (UAS) platform. The satellite or UAS platform provides communication coverage over a very large area, for example, in the form of a plurality of smaller areas (shown as beam footprint). The satellite or UAS platform is communicating with the data network via a feeder link over a gateway.

In the NTN scenario, there are different types of satellite orbits for NR access including Low Earth Orbit (LEO) satellites which orbit at approximately 600 km above the earth. Typical size of a beam footprint for a LEO satellite may be between 100 to 1000 km radius. That is, one LEO satellite covers a very large area on the earth which may include multiple countries.

The network therefore needs to be able to actively verify with a certain accuracy that the user equipment is at the location the user equipment is claiming to be. From the network perspective, the verification of the location is necessary for purposes of billing, charging, lawful interception, and country regulations such as allowability of certain data and transmit power used in operation in certain countries (for example).

### LIST OF ACRONYMS AND ABBREVIATIONS

The following acronyms and abbreviations are used throughout the subject disclosure:
- UE:: User Equipment
- TN:: Terrestrial Network
- NTN:: Non-Terrestrial Networks
- SIB:: System Information Broadcast
- gNB:: Base station of 5G system
- GNSS:: Global Navigation Satellite System
- RAN:: Radio access network
- RTT:: Round Trip time
- TA:: Timing Advance
- 3GPP:: 3^{rd} Generation Partnership Project
- UL:: Uplink
- DL:: Downlink
- Tx:: Transmitter (or transmit)
- Rx:: Receiver (or receive)
- SR:: Scheduling request
- SRS:: Sounding Reference signal
- PRS:: Positioning Reference signal
- MAC-CE:: Medium Access Control - Control Element
- LMF:: Location management function

### SUMMARY

It is an object of the subject disclosure to provide mechanisms for signalling TA adjustment during a RTT measurement in non-terrestrial network to improve reliability of location determination and the RTT measurement. There are provided methods and apparatuses for signalling TA adjustment during a RTT measurement in non-terrestrial network.

According to some aspects, there is provided the subject matter of the independent claims. Some further aspects are defined in the dependent claims.

According to a first aspect of the subject disclosure, there is provided a method performed by a terminal node in a non-terrestrial network. The method comprises: performing a timing advance (TA) adjustment during a round trip time (RTT) measurement; and in response to the TA adjustment exceeding a threshold, providing, to a network node, an indication relating to the RTT measurement to indicate that the TA adjustment exceeds the threshold.

In some examples of the first aspect, the method may further comprise receiving, from the network node, the threshold. According to some examples, the threshold may be received in a system information broadcast (SIB) or in a Radio Resource Control (RRC) message.

In some examples of the first aspect, the threshold may comprise a TA change threshold defining in time on how much TA is allowed to be adjusted by the terminal node before the indication is to be provided to the network node.

In some examples of the first aspect, the method may further comprise determining whether the TA adjustment exceeds the threshold.

In some examples of the first aspect, the method may further comprise deciding, based on a configuration information whether to provide an indication relating to the TA adjustment to the network node; and in response to performing the TA adjustment during the RTT measurement, providing, to the network node, the indication relating to the TA adjustment to the network node to indicate the TA adjustment. In some examples, the configuration information comprises the threshold. In some examples, the indication relating to the TA adjustment comprises the indication relating to the RTT measurement to indicate that the TA adjustment exceeds the threshold.

In some examples of the first aspect, providing the indication may comprise preventing to transmit, to the network node, an uplink positioning reference signal (PRS) to indicate to the network node that the RTT measurement may be not valid. In some examples, lack of the uplink PRS is to indicate to the network node that the RTT measurement may be not valid.

In some examples of the first aspect, providing the indication may comprises: transmitting, to the network node, an uplink positioning reference signal (PRS); and providing, to the network node, a notification that the RTT measurement may be not valid. In some examples, the notification may be provided to the network node on lower layers.

In some examples of the first aspect, providing the notification may comprise transmitting, to the network node, a scheduling request to indicate, to the network node, that a new RTT measurement is to be performed. In some examples, transmitting the scheduling request may comprise transmitting the scheduling request on a resource associated to a transmission of PRS.

In some examples of the first aspect, providing the notification may comprise: generating a medium access control (MAC) structure carrying control information to inform the network node that the RTT measurement may be not valid; and transmitting, to the network node, the MAC structure to indicate, to the network node, that a new RTT measurement is to be performed.

In some examples of the first aspect, providing the indication relating to the RTT measurement may comprise: transmitting, to the network node, an uplink positioning reference signal (PRS) including a predetermined PRS pattern, the predetermined PRS pattern indicating, to the network node, that a new RTT measurement is to be performed. In some examples, the method may further comprise configuring at least two different PRS patterns, wherein one of the two PRS patterns is to be used for normal uplink PRS transmission and the other, being the predetermined PRS pattern, is to be used to indicate, to the network node, that the new RTT measurement is to be performed.

In some examples of the first aspect, providing the indication relating to the RTT measurement may comprise transmitting, to the network node, an uplink positioning reference signal (PRS) including a predetermined PRS pattern, wherein the predetermined PRS pattern is used when the TA adjustment exceeds the threshold and indicates, to the network node, that a new RTT measurement is to be performed, and another PRS pattern is used when the TA adjustment does not exceed the threshold. In some examples, the method may further comprise configuring the predetermined PRS pattern and the other PRS pattern.

In some examples of the first aspect, providing the indication relating to the RTT measurement may comprise transmitting, to the network node, an uplink positioning reference signal (PRS) on a resource for PRS transmission, the resource indicating, to the network node, that a new RTT measurement is to be performed. In some examples, the method may further comprise configuring at least two different resources for PRS transmission being different in one or more of time, frequency, and code domain, wherein one of the two resources is to be used for normal uplink PRS transmission and the other, being the resource, is to be used to indicate, to the network node, that the new RTT measurement is to be performed.

In some examples of the first aspect, providing the indication relating to the RTT measurement may comprise transmitting, to the network node, an uplink positioning reference signal (PRS) on a predetermined resource, wherein the predetermined resource is used when the TA adjustment exceeds the threshold and indicates, to the network node, that a new RTT measurement is to be performed, and another resource is used when the TA adjustment does not exceed the threshold. The resources may differ in at least one of time, frequency, or code domain. In some examples, the method may further comprise configuring the predetermined resource and the other resource.

In some examples of the first aspect, providing the indication relating to the RTT measurement may comprise transmitting, to the network node, assistance information including the TA adjustment to indicate, to the network node, that the RTT measurement may be not valid.

In some examples of the first aspect, the method may further comprise: upon receiving a PRS configuration, acquiring, from the network node, a system information broadcast; and upon receiving, from the network node, the system information broadcast, updating system information based on the system information broadcast to ensure validity of information required for the TA adjustment during the RTT measurement.

In some examples of the first aspect, the terminal node may comprise a User Equipment (UE).

According to a second aspect of the subject disclosure, a terminal node (e.g., a user device or user equipment (UE)) or an apparatus in such a terminal node is provided. The terminal node or apparatus according to the second aspect comprises at least one processor and at least one memory including computer program code. The computer program code causes the terminal node or apparatus, when executed with the at least one processor, to: perform a timing advance (TA) adjustment during a round trip time (RTT) measurement; and in response to the TA adjustment exceeding a threshold, provide, to a network node, an indication relating to the RTT measurement to indicate that the TA adjustment exceeds the threshold.

In some examples of the second aspect, the computer program code may further cause the terminal node or apparatus, when executed with the at least one processor, to receive, from the network node, the threshold. According to some examples, the threshold may be received in a system information broadcast (SIB) or in a Radio Resource Control (RRC) message.

In some examples of the second aspect, the threshold may comprise a TA change threshold defining in time on how much TA is allowed to be adjusted by the terminal node before the indication is to be provided to the network node.

In some examples of the second aspect, the computer program code may further cause the terminal node or apparatus, when executed with the at least one processor, to determine whether the TA adjustment exceeds the threshold.

In some examples of the second aspect, the computer program code may further cause the terminal node or apparatus, when executed with the at least one processor, to decide, based on a configuration information whether to provide an indication relating to the TA adjustment to the network node; and in response to performing the TA adjustment during the RTT measurement, provide, to the network node, the indication relating to the TA adjustment to the network node to indicate the TA adjustment. In some examples, the configuration information comprises the threshold. In some examples, the indication relating to the TA adjustment comprises the indication relating to the RTT measurement to indicate that the TA adjustment exceeds the threshold.

In some examples of the second aspect, the computer program code to provide the indication may further cause the terminal node or apparatus, when executed with the at least one processor, to prevent to transmit, to the network node, an uplink positioning reference signal (PRS) to indicate to the network node that the RTT measurement may be not valid. In some examples, lack of the uplink PRS is to indicate to the network node that the RTT measurement may be not valid.

In some examples of the second aspect, the computer program code to provide the indication may further cause the terminal node or apparatus, when executed with the at least one processor, to transmit, to the network node, an uplink positioning reference signal (PRS); and provide, to the network node, a notification that the RTT measurement may be not valid. In some examples, the notification may be provided to the network node on lower layers.

In some examples of the second aspect, the computer program code to provide the notification may further cause the terminal node or apparatus, when executed with the at least one processor, to transmit, to the network node, a scheduling request to indicate, to the network node, that a new RTT measurement is to be performed. In some examples, the computer program code to transmit the scheduling request may further cause the terminal node or apparatus, when executed with the at least one processor, to transmit the scheduling request on a resource associated to a transmission of PRS.

In some examples of the second aspect, the computer program code to provide the notification may further cause the terminal node or apparatus, when executed with the at least one processor, to: generate a medium access control (MAC) structure carrying control information to inform the network node that the RTT measurement may be not valid; and transmit, to the network node, the MAC structure to indicate, to the network node, that a new RTT measurement is to be performed.

In some examples of the second aspect, the computer program code to provide the indication relating to the RTT measurement may further cause the terminal node or apparatus, when executed with the at least one processor, to: transmit, to the network node, an uplink positioning reference signal (PRS) including a predetermined PRS pattern, the predetermined PRS pattern indicating, to the network node, that a new RTT measurement is to be performed. In some examples, the computer program code may further cause the terminal node or apparatus, when executed with the at least one processor, to configure at least two different PRS patterns, wherein one of the two PRS patterns is to be used for normal uplink PRS transmission and the other, being the predetermined PRS pattern, is to be used to indicate, to the network node, that the new RTT measurement is to be performed.

In some examples of the second aspect, the computer program code to provide the indication relating to the RTT measurement may further cause the terminal node or apparatus, when executed with the at least one processor, to transmit, to the network node, an uplink positioning reference signal (PRS) including a predetermined PRS pattern, wherein the predetermined PRS pattern is used when the TA adjustment exceeds the threshold and indicates, to the network node, that a new RTT measurement is to be performed, and another PRS pattern is used when the TA adjustment does not exceed the threshold.

In some examples of the second aspect, the computer program code to provide the indication relating to the RTT measurement may further cause the terminal node or apparatus, when executed with the at least one processor, to transmit, to the network node, an uplink positioning reference signal (PRS) on a resource for PRS transmission, the resource indicating, to the network node, that a new RTT measurement is to be performed. In some examples, the computer program code may further cause the terminal node or apparatus, when executed with the at least one processor, to configure at least two different resources for PRS transmission being different in one or more of time, frequency and code domain, wherein one of the two resources is to be used for normal uplink PRS transmission and the other, being the resource, is to be used to indicate, to the network node, that the new RTT measurement is to be performed.

In some examples of the second aspect, the computer program code to provide the indication relating to the RTT measurement may further cause the terminal node or apparatus, when executed with the at least one processor, to transmit, to the network node, an uplink positioning reference signal (PRS) on a predetermined resource, wherein the predetermined resource is used when the TA adjustment exceeds the threshold and indicates, to the network node, that a new RTT measurement is to be performed, and another resource is used when the TA adjustment does not exceed the threshold. The resources may differ in at least one of time, frequency, or code domain.

In some examples of the second aspect, the computer program code to provide the indication relating to the RTT measurement may further cause the terminal node or apparatus, when executed with the at least one processor, to transmit, to the network node, assistance information including the TA adjustment to indicate, to the network node, that the RTT measurement may be not valid.

In some examples of the second aspect, the computer program code may further cause the terminal node or apparatus, when executed with the at least one processor, to: upon receiving a PRS configuration, acquire, from the network node, a system information broadcast; and upon receiving, from the network node, the system information broadcast, update system information based on the system information broadcast to ensure validity of information required for the TA adjustment during the RTT measurement.

In some examples of the second aspect, the terminal node may comprise a User Equipment (UE).

According to a third aspect of the subject disclosure, a terminal node (e.g., a user device or user equipment (UE)) or an apparatus in such a terminal node is provided. The terminal node or apparatus according to the third aspect comprises: means or modules for performing a timing advance (TA) adjustment during a round trip time (RTT) measurement (e.g., a timing advance (TA) adjuster); and means or modules for, in response to the TA adjustment exceeding a threshold, providing, to a network node, an indication relating to the RTT measurement to indicate that the TA adjustment exceeds the threshold (e.g., a transmitter).

In some examples of the third aspect, the terminal node or apparatus further comprises means or modules for performing one or more of the examples according to the first aspect.

According to a fourth aspect of the subject disclosure, a terminal node (e.g., a user device or user equipment (UE)) or an apparatus in such a terminal node is provided. The terminal node or apparatus according to the fourth aspect comprises: circuitry to perform a timing advance (TA) adjustment during a round trip time (RTT) measurement; and circuitry to, in response to the TA adjustment exceeding a threshold, provide, to a network node, an indication relating to the RTT measurement to indicate that the TA adjustment exceeds the threshold.

In some examples of the fourth aspect, the terminal node or apparatus further comprises circuitry to perform one or more of the examples according to the first aspect.

According to a fifth aspect of the subject disclosure, there is provided a method performed by a network node in a non-terrestrial network. The method comprises: receiving, from a terminal node, an indication relating to a round trip time (RTT) measurement, the indication indicating that a timing advance (TA) adjustment performed by the terminal node during the RTT measurement exceeds a threshold; and deciding, based on the indication, whether a new RTT measurement is to be performed.

In some examples of the fifth aspect, the method may further comprise transmitting, to the terminal node, the threshold. According to some examples, the threshold may be transmitted in a system information broadcast (SIB) or in a Radio Resource Control (RRC) message.

In some examples of the fifth aspect, the threshold may comprise a TA change threshold defining in time on how much TA is allowed to be adjusted by the terminal node before the indication is to be provided to the network node.

In some examples of the fifth aspect, the method may further comprise receiving, from the terminal node, an indication relating to the TA adjustment to indicate that the terminal node performed the TA adjustment during RTT measurement. In some examples, the indication relating to the TA adjustment comprises the indication relating to the RTT measurement to indicate that the TA adjustment exceeds the threshold.

In some examples of the fifth aspect, receiving the indication relating to RTT measurement may comprise determining whether an uplink positioning reference signal (PRS) is received from the terminal node, wherein not receiving the uplink PRS provides the indication to the network node. In some examples, lack of the uplink PRS is to indicate that the RTT measurement may be not valid.

In some examples of the fifth aspect, receiving the indication relating to RTT measurement may comprise: receiving, from the terminal node, an uplink positioning reference signal (PRS); and receiving, from the terminal node, a notification that the RTT measurement may be not valid. In some examples, the notification may be received on lower layers.

In some examples of the fifth aspect, receiving the notification comprises receiving, from the terminal node, a scheduling request to indicate, to the network node, that a new RTT measurement is to be performed. In some examples, receiving the scheduling request may further comprise receiving the scheduling request on a resource associated to a transmission of PRS.

In some examples of the fifth aspect, receiving the notification may comprise receiving, from the terminal node, a medium access control (MAC) structure carrying control information to inform that the RTT measurement may be not valid.

In some examples of the fifth aspect, receiving the indication relating to the RTT measurement may comprise receiving, from the terminal node, an uplink positioning reference signal (PRS) including a predetermined PRS pattern, the predetermined PRS pattern indicating that a new RTT measurement is to be performed. In some examples, the method may further comprise configuring the terminal node with at least two different PRS patterns, wherein one of the two PRS patterns is to be used for normal uplink PRS transmission and the other, being the predetermined PRS pattern, is to be used to indicate that the new RTT measurement is to be performed.

In some examples of the fifth aspect, receiving the indication relating to the RTT measurement may comprise receiving, from the terminal node, an uplink positioning reference signal (PRS) including a predetermined PRS pattern, wherein the predetermined PRS pattern is used when the TA adjustment exceeds the threshold and indicates, to the network node, that a new RTT measurement is to be performed, and another PRS pattern is used when the TA adjustment does not exceed the threshold. In some examples, the method may further comprise configuring the terminal node with the predetermined PRS pattern and the other PRS pattern.

In some examples of the fifth aspect, receiving the indication relating to the RTT measurement may comprise receiving, from the terminal node, an uplink positioning reference signal (PRS) on a predetermined resource, the predetermined resource indicating that a new RTT measurement is to be performed. In some examples, the method may further comprise configuring the terminal node with at least two different resources for PRS transmission being different in one or more of time, frequency, and code domain, wherein one of the two resources is to be used for normal uplink PRS transmission and the other, being the resource, is to be used to indicate that the new RTT measurement is to be performed.

In some examples of the fifth aspect, receiving the indication relating to the RTT measurement may comprise receiving, from the terminal node, an uplink positioning reference signal (PRS) on a predetermined resource, wherein the predetermined resource is used when the adjustment exceeds the threshold and indicates to the network node, that a new RTT measurement is to be performed, and another resource is used for the PRS when the adjustment does not exceed the threshold. The resources may differ in at least one of time, frequency, or code domain. In some examples, the method may further comprise configuring the terminal node with the predetermined resource and the other resource.

In some examples of the fifth aspect, receiving the indication relating to the RTT measurement may comprise receiving, from the terminal node, assistance information including the TA adjustment to indicate that the RTT measurement may be not valid.

In some examples of the fifth aspect, the method may further comprise: transmitting, to the terminal node, a PRS configuration; and transmitting, to the terminal node, a system information broadcast to be used, by the terminal node, to update system information to ensure validity of information required for the TA adjustment during the RTT measurement.

In some examples of the fifth aspect, the network node may comprise one or more of a base station (gNB) and a location management function (LMF).

According to a sixth aspect of the subject disclosure, a network node (e.g., a base station) or an apparatus in such a network node is provided. The network node or apparatus according to the sixth aspect comprises at least one processor and at least one memory including computer program code. The computer program code causes the network node or apparatus, when executed with the at least one processor, to: receive, from a terminal node, an indication relating to a round trip time (RTT) measurement, the indication indicating that a timing advance (TA) adjustment performed by the terminal node during the RTT measurement exceeds a threshold; and decide, based on the indication, whether a new RTT measurement is to be performed.

In some examples of the sixth aspect, the computer program code may further cause the network node or apparatus, when executed with the at least one processor, to transmit, to the terminal node, the threshold. According to some examples, the threshold may be transmitted in a system information broadcast (SIB) or in a Radio Resource Control (RRC) message.

In some examples of the sixth aspect, the threshold may comprise a TA change threshold defining in time on how much TA is allowed to be adjusted by the terminal node before the indication is to be provided to the network node.

In some examples of the sixth aspect, the computer program code may further cause the network node or apparatus, when executed with the at least one processor, to receive, from the terminal node, an indication relating to the TA adjustment to indicate that the terminal node performed the TA adjustment during RTT measurement. In some examples, the indication relating to the TA adjustment comprises the indication relating to the RTT measurement to indicate that the TA adjustment exceeds the threshold.

In some examples of the sixth aspect, the computer program code to receive the indication relating to RTT measurement may further cause the network node or apparatus, when executed with the at least one processor, to determine whether an uplink positioning reference signal (PRS) is received from the terminal node, wherein not receiving the uplink PRS provides the indication to the network node. In some examples, lack of the uplink PRS is to indicate that the RTT measurement may be not valid.

In some examples of the sixth aspect, the computer program code to receive the indication relating to RTT measurement may further cause the network node or apparatus, when executed with the at least one processor, to: receive, from the terminal node, an uplink positioning reference signal (PRS); and receive, from the terminal node, a notification that the RTT measurement may be not valid. In some examples, the notification may be received on lower layers.

In some examples of the sixth aspect, the computer program code to receive the notification may further cause the network node or apparatus, when executed with the at least one processor, to receive, from the terminal node, a scheduling request to indicate, to the network node, that a new RTT measurement is to be performed. In some examples, the computer program code to receive the scheduling request may further cause the network node or apparatus, when executed with the at least one processor, to receive the scheduling request on a resource associated to a transmission of PRS.

In some examples of the sixth aspect, the computer program code to receive the notification may further cause the network node or apparatus, when executed with the at least one processor, to receive, from the terminal node, a medium access control (MAC) structure carrying control information to inform that the RTT measurement may be not valid.

In some examples of the sixth aspect, the computer program code to receive the indication relating to the RTT measurement may further cause the network node or apparatus, when executed with the at least one processor, to receive, from the terminal node, an uplink positioning reference signal (PRS) including a predetermined PRS pattern, the predetermined PRS pattern indicating that a new RTT measurement is to be performed. In some examples, the computer program code may further cause the network node or apparatus, when executed with the at least one processor, to configure the terminal node with at least two different PRS patterns, wherein one of the two PRS patterns is to be used for normal uplink PRS transmission and the other, being the predetermined PRS pattern, is to be used to indicate that the new RTT measurement is to be performed.

In some examples of the sixth aspect, the computer program code to receive the indication relating to the RTT measurement may further cause the network node or apparatus, when executed with the at least one processor, to receive, from the terminal node, an uplink positioning reference signal (PRS) including a predetermined PRS pattern, wherein the predetermined PRS pattern is used when the TA adjustment exceeds the threshold and indicates, to the network node, that a new RTT measurement is to be performed, and another PRS pattern is used when the TA adjustment does not exceed the threshold. In some examples, the computer program code may further cause the network node or apparatus, when executed with the at least one processor, to configure the terminal node with the predetermined PRS pattern and the other PRS pattern.

In some examples of the sixth aspect, the computer program code to receive the indication relating to the RTT measurement may further cause the network node or apparatus, when executed with the at least one processor, to receive, from the terminal node, an uplink positioning reference signal (PRS) on a predetermined resource, the predetermined resource indicating that a new RTT measurement is to be performed. In some examples, the computer program code may further cause the network node or apparatus, when executed with the at least one processor, to configure the terminal node with at least two different resources for PRS transmission being different in one or more of time, frequency and code domain, wherein one of the two resources is to be used for normal uplink PRS transmission and the other, being the resource, is to be used to indicate that the new RTT measurement is to be performed.

In some examples of the sixth aspect, the computer program code to receive the indication relating to the RTT measurement may further cause the network node or apparatus, when executed with the at least one processor, to receive, from the terminal node, an uplink positioning reference signal (PRS) on a predetermined resource, wherein the predetermined resource is used when the adjustment exceeds the threshold and indicates to the network node, that a new RTT measurement is to be performed, and another resource is used for the PRS when the adjustment does not exceed the threshold. The resources may differ in at least one of time, frequency, or code domain. In some examples, the computer program code may further cause the network node or apparatus, when executed with the at least one processor, to configure the terminal node with the predetermined resource and the other resource.

In some examples of the sixth aspect, the computer program code to receive the indication relating to the RTT measurement may further cause the network node or apparatus, when executed with the at least one processor, to receive, from the terminal node, assistance information including the TA adjustment to indicate that the RTT measurement may be not valid.

In some examples of the sixth aspect, the computer program code may further cause the network node or apparatus, when executed with the at least one processor, to: transmit, to the terminal node, a PRS configuration; and transmit, to the terminal node, a system information broadcast to be used, by the terminal node, to update system information to ensure validity of information required for the TA adjustment during the RTT measurement.

In some examples of the sixth aspect, the network node may comprise one or more of a base station (gNB) and a location management function (LMF).

According to a seventh aspect of the subject disclosure, a network node (e.g., a base station) or an apparatus in such a network node is provided. The network node or apparatus according to the seventh aspect comprises: means or modules for receiving, from a terminal node, an indication relating to a round trip time (RTT) measurement, the indication indicating that a timing advance (TA) adjustment performed by the terminal node during the RTT measurement exceeds a threshold (e.g., a receiver); and means or modules for deciding, based on the indication, whether a new RTT measurement is to be performed (e.g., a decision logic).

In some examples of the seventh aspect, the network node or apparatus further comprises means or modules for performing one or more of the examples according to the fifth aspect.

According to an eighth aspect of the subject disclosure, a network node (e.g., a base station) or an apparatus in such a network node is provided. The network node or apparatus according to the eighth aspect comprises: circuitry to receive, from a terminal node, an indication relating to a round trip time (RTT) measurement, the indication indicating that a timing advance (TA) adjustment performed by the terminal node during the RTT measurement exceeds a threshold; and circuitry to decide, based on the indication, whether a new RTT measurement is to be performed.

In some examples of the eighth aspect, the network node or apparatus further comprises circuitry to perform one or more of the examples according to the fifth aspect.

According to a ninth aspect of the subject disclosure, a computer program product comprises program instructions stored on a computer readable medium to execute steps according to any one of the examples of the methods according to the first and fifth aspect as outlined above when said program is executed on a computer.

According to a tenth aspect of the subject disclosure, a non-transitory computer-readable medium containing computer-executable instructions which when run on one or more processors perform the steps according to any one of the examples of the methods according to the first and fifth aspect as outline above.

The above-noted aspects and features may be implemented in systems, apparatuses, methods, articles and/or non-transitory computer-readable media depending on the desired configuration. The subject disclosure may be implemented in and/or used with a number of different types of devices, including but not limited to cellular phones, tablet computers, wearable computing devices, portable media players, and any of various other computing devices.

This summary is intended to provide a brief overview of some of the aspects and features according to the subject disclosure. Accordingly, it will be appreciated that the above-described features are merely examples and should not be construed to narrow the scope of the subject disclosure in any way. Other features, aspects, and advantages of the subject disclosure will become apparent from the following detailed description, drawings, and claims.

### BRIEF DESCRIPTION OF THE DRAWINGS

A better understanding of the subject disclosure can be obtained when the following detailed description of various embodiments is considered in conjunction with the following drawings, in which:
FIG. 1 shows a schematic diagram of an example (mobile/wireless) communication system or network;
FIG. 2 shows a schematic diagram of an example wireless device or entity;
FIG. 3 shows a schematic diagram of an example network node or entity;
FIG. 4 shows an example architecture of a non-terrestrial network;
FIG. 5 shows a procedure for Multi-RTT positioning in terrestrial networks.
FIG. 6 shows a sequence diagram of a procedure for Multi-RTT positioning in terrestrial networks according to 3GPP standard;
FIG. 7 shows as to how K_{offset} is used;
FIG. 8 shows a flowchart of a method or process for signalling TA adjustment during RTT measurement in non-terrestrial network according to some embodiments, to be performed by a terminal node;
FIG. 9 shows a flowchart of a method or process for signalling TA adjustment during RTT measurement in non-terrestrial network according to some embodiments, to be performed by a network node;
FIGS. 10 to 12 show exemplary message sequence diagrams of the methods or processes for signalling TA adjustment during RTT measurement in non-terrestrial network according to some embodiments.

### DETAILED DESCRIPTION

The examples and embodiments set forth below represent information to enable those skilled in the art to practice the subject disclosure. Upon reading the following description in light of the accompanying drawing figures, those skilled in the art will understand the concepts of the description and will recognize applications of these concepts not particularly addressed herein.

It should be understood that these concepts and applications fall within the scope of the description.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

It is to be noted that the detailed description, at times, refers to one or more specifications being used as non-limiting and illustrative examples for certain architectures, network configurations and system deployments. More specifically, the detailed description refers to 3GPP standards, being used as non-limiting and illustrative examples. As such, the example embodiments provided herein can specifically employ terminology which is directly related thereto. Such terminology is only used in the context of the non-limiting and illustrative examples and is not intended to limit the example embodiments in any way. Rather, any other system configuration or deployment may be utilized while complying with what is described herein and/or example embodiments are applicable to it.

For example, various example embodiments are applicable in any (e.g., mobile/wireless) communication system, such as a 5G/NR system and a next-generation system beyond 5G. For example, various example embodiments are applicable in a 3GPP-standardized mobile/wireless communication system of Release 18 onwards.

Hereinafter, various example embodiments are described using several variants and/or alternatives. It is generally to be noted that, according to certain implementations or constraints, all the described variants and/or alternatives may be provided alone or in any conceivable combination (e.g., also including combinations of individual features of these various variants and/or alternatives).

As used herein, the words "comprising" and "including" should be understood as not limiting the example embodiments to consist of only those features that have been mentioned, and example embodiments may also contain, among other things, e.g., features, structures, units, modules, or the like, that have not been specifically mentioned.

As used herein, "at least one of the following: <a list of two or more elements>" and "at least one of <a list of two or more elements>" and similar wording, like "one or more of", where the list of two or more elements are joined by "and" or "or", mean at least any one of the elements, or at least any two or more of the elements, or at least all the elements.

As used herein, according to various example embodiments, any operations of sending or receiving may comprise actual transmission or communication operations, i.e., transmitting or communicating associated messages or signals, but may additionally or alternatively comprise related processing operations, i.e., preparing/generating/issuing associated messages or signals before sending and/or obtaining/handling/processing of associated messages or signals after receiving. For example, sending a message at/by an entity may comprise generating/issuing and/or transmitting/communicating thereof or a corresponding signal in/at/by the entity, and receiving a message at/by an entity may comprise obtaining/handling and/or processing thereof or a corresponding signal in/at/by the entity. As used herein, a message may refer to and/or encompass any kind of corresponding information, signal, or the like.

In the drawings, it is to be noted that lines/arrows interconnecting individual blocks or entities are generally meant to illustrate an operational coupling there-between, which may be a physical and/or logical coupling, which on the one hand is implementation-independent (e.g., wired or wireless) and on the other hand may also comprise an arbitrary number of intermediary functional blocks or entities not shown. In flowcharts or sequence diagrams, the illustrated order of operations or actions is generally non-limiting and illustrative, and any other order of respective operations or actions is conceivable, if feasible.

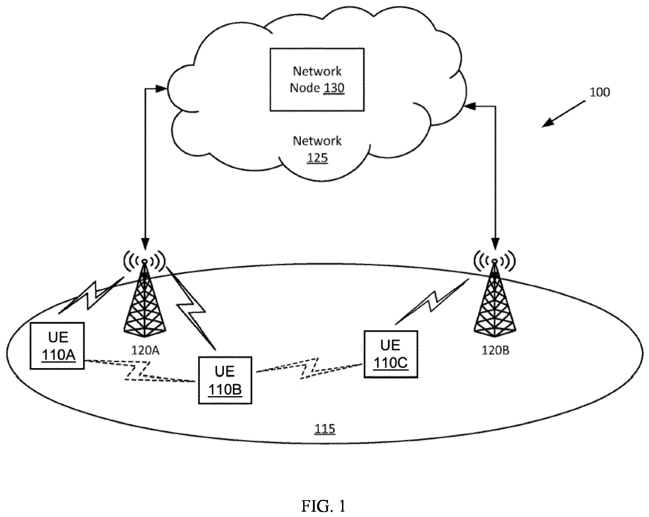

Before explaining example embodiments in detail, certain general principles of a (mobile/wireless) communication system or network are briefly explained with reference to FIGS. 1 to 3 to assist in understanding the technology underlying the described example embodiments.

FIG. 1 illustrates an example of a (mobile/wireless) communication system or network 100 that may be used for wireless communications. Communication system or network 100 includes wireless devices or entities, such as UEs 110 (e.g., 110A-110C), and network nodes or entities, such as radio access nodes 120 (e.g., 120A-120B) (e.g., eNBs, gNBs, etc.), connected to one or more network nodes or entities 130 via an interconnecting network 125. Communication system or network 100 may use any suitable deployment scenarios. UEs 110 within coverage area 115 may each be capable of communicating directly with radio access nodes 120 over a wireless interface.

As an example, UE 110A may communicate with radio access node 120A over a wireless interface. That is, UE 110A may transmit wireless signals to and/or receive wireless signals from radio access node 120A. The wireless signals may contain voice traffic, data traffic, control signals, and/or any other suitable information.

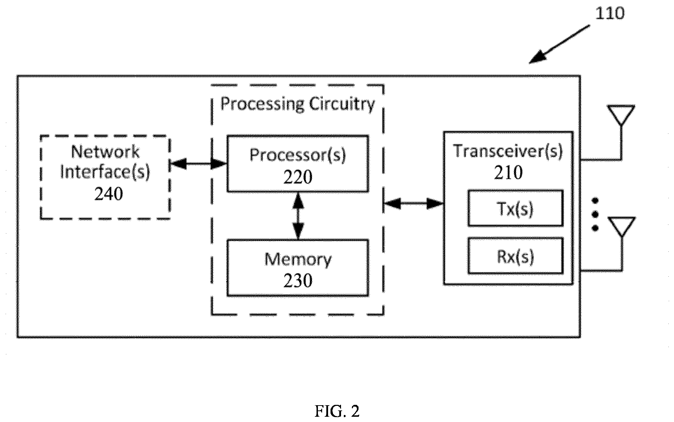

As used herein, the term "user equipment" (UE) has the full breadth of its ordinary meaning and may refer to any type of wireless device or entity which can communicate with a network node or entity and/or with another UE in a cellular or mobile or wireless/mobile communication system. Examples of UE are target device, D2D UE, machine type UE or UE capable of machine-to-machine (M2M) communication, personal digital assistant, tablet, mobile terminal, smartphone, laptop embedded equipped (LEE), laptop mounted equipment (LME), USB dongles, ProSe UE, vehicle-to-vehicle (V2V) UE, V2X UE, MTC UE, eMTC UE, FeMTC UE, UE Cat 0, UE Cat Ml, narrow band IoT (NB-IoT) UE, UE Cat NB1, etc. Example embodiments of a UE are described in more detail below with respect to FIG. 2.

In some embodiments, an area of wireless signal coverage 115 associated with a radio access node 120 may be referred to as a cell. However, particularly with respect to the fifth generation (5G) / New Radio (NR) mobile communication concepts, beams may be used instead of cells and, as such, it is important to note that concepts described herein are equally applicable to both cells and beams.

With respect to a beam-based mobile communication system, the radio access node 120 (base station) may transmit a beamformed signal to the UE 110 in one or more transmit directions (transmission beam, Tx beam). The UE 110 may receive the beamformed signal from the base station 120 in one or more receive directions (reception beam, Rx beam). The UE 110 may also transmit a beamformed signal to the base station 120 in one or more directions and the base station 120 may receive the beamformed signal from the UE 110 in one or more directions. The base station 120 and the UE 110 may determine the best receive and transmit directions, e.g., *best* in the sense of these directions leading to the highest link quality or fulfilling other quality conditions in the most suitable manner, for each of the base station/UE pairs.

The interconnecting network 125 may refer to any interconnecting system capable of transmitting audio, video, signals, data, messages, etc., or any combination of the preceding. The interconnecting network 125 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the network node 130 may be a core network node, managing the establishment of communication sessions and other various other functionalities for UEs 110. Examples of network node 130 may include mobile switching center (MSC), MME, serving gateway (SGW), packet data network gateway (PGW), operation and maintenance (O&M), operations support system (OSS), SON, positioning node (e.g., Enhanced Serving Mobile Location Center, E-SMI,C), location server node, MDT node, etc. UEs 110 may exchange certain signals with the network node 130 using the non-access stratum (NAS) layer. In non-access stratum signaling, signals between UEs 110 and the network node 130 may be transparently passed through the radio access network. In some embodiments, radio access nodes 120 may interface with one or more network nodes 130 over an internode interface.

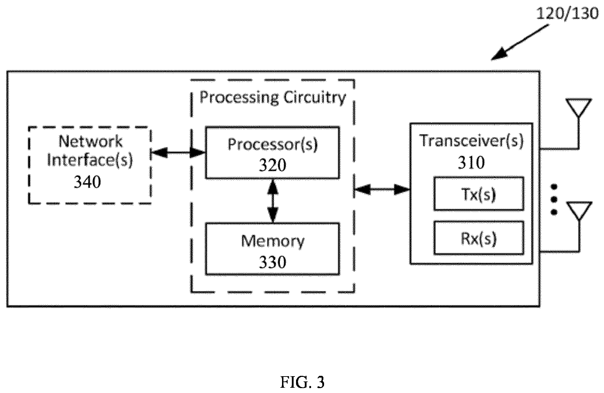

As used herein, the term "network node or entity" has the full breadth of its ordinary meaning and may correspond to any type of radio access node (or radio network node) or any network node, which can communicate with a UE and/or with another network node in a cellular or mobile or wireless communication system. Examples of network nodes are NodeB, MeNB, SeNB, a network node may belonging to MCG or SCG, base station (BS), multi-standard radio (MSR) radio access node such as MSR BS, eNodeB, network controller, radio network controller (RNC), base station controller (BSC), relay, donor node controlling relay, base transceiver station (BTS), access point (AP), transmission point, transmission node, RRU, RRH, node in distributed antenna system (DAS), core network node (e.g., MSC, MME, etc.), O&M, OSS, Self-organizing Network (SON), positioning node (e.g., E-SMLC), MDT, test equipment, etc. Example embodiments of a network node are described in more detail below with respect to FIG. 3.

In some embodiments, radio access node 120 may be a distributed radio access node. The components of the radio access node 120, and their associated functions, may be separated into two main units (or sub-radio network nodes) which may be referred to as the central unit (CU) and the distributed unit (DU). Different distributed radio network node architectures are possible. For instance, in some architectures, a DU may be connected to a CU via dedicated wired or wireless link (e.g., an optical fiber cable) while in other architectures, a DU may be connected a CU via a transport network. Also, how the various functions of the radio access node 120 are separated between the CU(s) and DU(s) may vary depending on the chosen architecture.

Exemplary wireless communication systems are architectures standardized by the 3rd Generation Partnership Project (3GPP). A latest 3GPP based development is often referred to as the long-term evolution (LTE) of the Universal Mobile Telecommunications System (UMTS) radio-access technology (RAT). The various development stages of the 3GPP specifications are referred to as releases. More recent developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other RAT examples comprise those provided by base stations of systems that are based on technologies such as WLAN and/or Worldwide Interoperability for Microwave Access (WiMax). A base station can provide coverage for an entire cell or similar radio service area. Core network elements include Mobility Management Entity (MME), Serving Gateway (S-GW) and Packet Gateway (P-GW).

An example of a suitable communications system is the 5G or NR concept. Network architecture in NR may be similar to that of LTE-A. Base stations of NR systems may be known as next generation Node Bs (gNBs). Changes to the network architecture may depend on the need to support various radio technologies and finer Quality of Service (QoS) support, and some on-demand requirements for QoS levels to support Quality of Experience (QoE) of user point of view. Also network aware services and applications, and service and application aware networks may bring changes to the architecture. Those are related to Information Centric Network (ICN) and User-Centric Content Delivery Network (UC-CDN) approaches. NR may use multiple input-multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes, or hosts. It should also be understood that the distribution of labor between core network operations and base station operations may differ from that of the LTE or even be non-existent.

An example 5G core network (CN) comprises functional entities. The CN is connected to a UE via the radio access network (RAN). An UPF (User Plane Function) whose role is called PSA (PDU Session Anchor) may be responsible for forwarding frames back and forth between the DN (data network) and the tunnels established over the 5G towards the UEs exchanging traffic with the data network (DN). The UPF is controlled by an SMF (Session Management Function) that receives policies from a PCF (Policy Control Function). The CN may also include an AMF (Access & Mobility Function).

Generally, all concepts disclosed herein may be applicable to different communication networks, comprising but not limited to LTE, LTE-A, 5G, 5G advanced, 6G, and other future or already implemented networks.

FIG. 2 is a schematic diagram of an example wireless device, UE 110, according certain example embodiments. UE 110 may include one or more of at least one transceiver 210, at least one processor 220, at least one memory 230, and at least one network interface 240. In certain example embodiments, the transceiver 210 facilitates transmitting wireless signals to and receiving wireless signals from radio access node 120 (e.g., via transmitter(s) (Tx), receiver(s) (Rx) and antenna(s)). The processor 220 executes instructions to provide some or all of the functionalities described herein as being provided by a wireless device/entity or UE, and the memory 230 stores the instructions executed by the processor 220. In some embodiments, the processor 220 and the memory 230 form processing circuitry.

The processor 220 may include any suitable combination of hardware to execute instructions and manipulate data to perform some or all the described functions of a wireless device or entity, such as the functions of UE 110 described herein. In some embodiments, the processor 220 may include, for example, one or more computers, one or more central processing units (CPUs), one or more microprocessors, one or more application specific integrated circuits (ASICs), one or more field programmable gate arrays (FPGAs) and/or other logic.

The memory 230 is generally operable to store instructions, such as a computer program, software, an application including one or more of logic, rules, algorithms, code, tables, etc. and/or other instructions capable of being executed by a processor 220. Examples of memory 230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information, data, and/or instructions that may be used by the processor 220 of UE 110. For example, the memory 230 includes computer program code causing the processor 220 to perform processing according to any corresponding methods described herein.

The network interface 240 is communicatively coupled to the processor 220 and may refer to any suitable device operable to receive input for UE 110, send output from UE 110, perform suitable processing of the input or output or both, communicate to other devices, or any combination thereof. The network interface 240 may include appropriate hardware (e.g., port, modem, network interface card, etc.) and software, including protocol conversion and data processing capabilities, to communicate through a network.

Other embodiments of UE 110 may include additional components beyond those shown in FIG. 2 that may be responsible for providing certain aspects of the wireless device's functionalities, including any of the functionalities described herein and/or any additional functionalities (including any functionality necessary to support the mechanisms according to the subject disclosure). As an example, UE 110 may include input devices and circuits, output devices, and one or more synchronization units or circuits, which may be part of the processor 220. Input devices include mechanisms for entry of data into UE 110. For example, input devices may include input mechanisms, such as a microphone, input elements, a display, etc. Output devices may include mechanisms for outputting data in audio, video and/or hard copy format. For example, output devices may include a speaker, a display, etc.

In certain example embodiments, the wireless device UE 110 may comprise a series of modules configured to implement the functionalities of the wireless device described herein.

It will be appreciated that the various modules may be implemented as combination of hardware and software, for instance, the processor, memory, and transceiver(s) of UE 110 shown in FIG. 2. Certain example embodiments may also include additional modules to support additional and/or optional functionalities.

FIG. 3 is a schematic diagram of an example radio access node 120 or network node or entity 130 according to certain example embodiments. Radio access node 120 or network node or entity 130 may include one or more of at least one transceiver 310, at least one processor 320, at least one memory 330, and at least one network interface 340. In certain example embodiments, the transceiver 310 facilitates transmitting wireless signals to and receiving wireless signals from wireless devices, such as UE 110 (e.g., via transmitter(s) (Tx), receiver(s) (Rx), and antenna(s)). The processor 320 executes instructions to provide some or all the functionalities described herein as being provided by the radio access node 120 or the network node or entity 130, the memory 330 stores the instructions executed by the processor 320. In some embodiments, the processor 320 and the memory 330 form processing circuitry. The network interface 340 can communicate signals to backend network components, such as a gateway, switch, router, Internet, Public Switched Telephone Network (PSTN), core network nodes or radio network controllers, etc.

The processor 320 can include any suitable combination of hardware to execute instructions and manipulate data to perform some or all the described functions of the radio access node 120 or the network node or entity 130, such as those described herein. In some embodiments, the processor 320 may include, for example, one or more computers, one or more central processing units (CPUs), one or more microprocessors, one or more application specific integrated circuits (ASICs), one or more field programmable gate arrays (FPGAs) and/or other logic.

The memory 330 is generally operable to store instructions, such as a computer program, software, an application including one or more of logic, rules, algorithms, code, tables, etc. and/or other instructions capable of being executed by a processor 320. Examples of memory 330 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information. For example, the memory 330 includes computer program code causing the processor 320 to perform processing according to any corresponding methods described herein.

In certain example embodiments, the network interface 340 is communicatively coupled to the processor 320 and may refer to any suitable device operable to receive input for the radio access node 120 or the network node or entity 130, send output from the radio access node 120 or the network node or entity 130, perform suitable processing of the input or output or both, communicate to other devices, or any combination of the preceding. The network interface 340 may include appropriate hardware (e.g., port, modem, network interface card, etc.) and software, including protocol conversion and data processing capabilities, to communicate through a network.

Other example embodiments of the radio access node 120 or the network node or entity 130 can include additional components beyond those shown in FIG. 3 that may be responsible for providing certain aspects of the node's functionalities, including any of the functionalities described herein and/or any additional functionalities (including any functionality necessary to support the solutions described herein). The various different types of radio access nodes or network nodes may include components having the same physical hardware but configured (e.g., via programming) to support different radio access technologies, or may represent partly or entirely different physical components.

Processors, interfaces, and memory similar to those described with respect to FIG. 3 may be included in other nodes or entities (such as UE 110, radio access node 120, etc.). Other nodes or entities may optionally include or not include a wireless interface (such as the transceiver described in FIG. 3).

In certain example embodiments, the radio access node 120 or the network node or entity 130 may comprise a series of modules configured to implement the functionalities of the radio access node 120 or the network node or entity 130 described herein.

It will be appreciated that the various modules may be implemented as combination of hardware and software, for instance, the processor, memory, and transceiver(s) of the radio access node 120 or the network node or entity 130 shown in FIG. 3. Certain example embodiments may also include additional modules to support additional and/or optional functionalities.

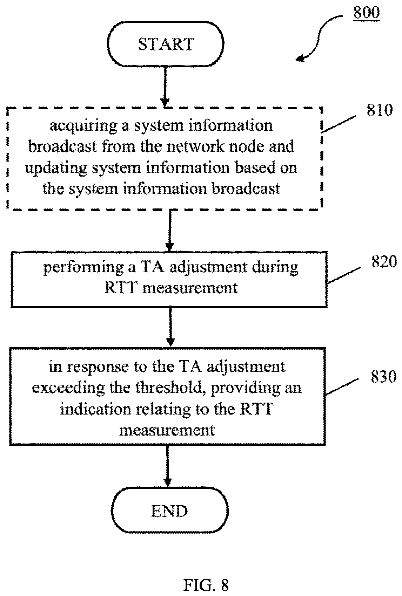

Before referring to FIGS. 8 to 12 and describing the methods for signalling TA adjustment during RTT measurement in non-terrestrial network according to some embodiments of the subject disclosure, some background information and aspects related to the subject disclosure will be provided.

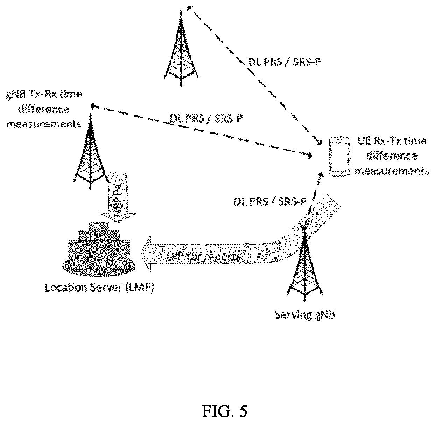

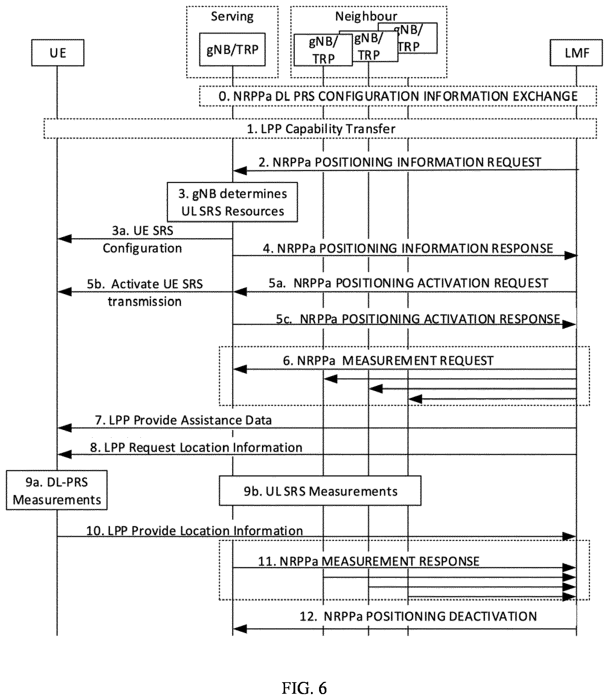

First, a procedure for multi-RTT measurements in terrestrial networks will be described with reference to FIGS. 5 and 6. For non-terrestrial network as illustrated in FIG. 4, the procedure may also be applied but may be supplemented by allowing that RTT may be measured by the same gNB (i.e., the same satellite) at different points in time such that the satellites movement over time creates measurement samples where the satellite's new position at different observation times creates different "location samples".

FIG. 5 illustrates a procedure for Multi-RTT positioning in terrestrial networks. The procedure illustrates the messaging between a Location Management Function (LMF) or Location Server, one or more basis stations (e.g., the serving gNBs) and a target device (e.g., a user equipment (UE)).

In a first step (designated DL PRS/SRS-P), the base stations (gNBs) transmit downlink PRS/SRS to the UE and the UE transmits uplink PRS/SRS to the gNBs. In a second step (designated UE Rx-Tx time difference measurement), the UE measures Rx-Tx time differences per gNB and in a third step (designated LPP for reports), reports the results of the Rx-Tx time difference measurements to the LMF. For example, the UE may use LPP.

In a fourth step (designated gNB Tx-RX time difference measurements), each gNB measures Rx-Tx time differences to the UE and in a fifth step (designated NRPPa), reports the results of the Rx-Tx time difference measurements to the LMF. For example, the gNB may use NRPPa.

Based on the Rx-Tx time difference measurements, the LMF estimates the RTT to the gNBs and the positioning of the UE.

FIG. 6 shows a sequence diagram of a procedure for Multi-RTT positioning according to 3GPP specifications. The sequence diagram illustrates the messaging between a Location Management Function (LMF), one or more base stations (gNBs) or transmission and reception points (TRPs), and a target device (e.g., a user equipment (UE)) to perform LMF-initiated Location Information Transfer Procedure for Multi-RTT.

At step 0, the LMF may perform a procedure to obtain the TRP information required for Multi-RTT positioning. The purpose of this procedure is to enable the gNB to provide assistance data to the LMF, for subsequent delivery to the UE or for use in the calculation of positioning estimates at the LMF or enable the LMF to request UL-SRS configuration information from the serving gNB of the target UE.

The procedure to obtain the TRP information required for Multi-RTT positioning comprises the LMF to determine that certain TRP configuration information is desired (e.g., as part of a periodic update or as triggered by Operations, Administration and Maintenance (OAM)) and send an NR Positioning Protocol A (NRPPa) TRP INFORMATION REQUEST message to the gNB. The request includes an indication of which specific TRP configuration information is requested. In response, the gNB provides the requested TRP information in an NRPPa TRP INFORMATION RESPONSE message, if available at the gNB. If the gNB is not able to provide any information, the gNB returns an TRP INFORMATION FAILURE message indicating the cause of the failure.

At step 1, the LMF may request the positioning capabilities of the target device using the LTE Positioning Protocol (LPP) Capability Transfer procedure. According to the LPP Capability Transfer procedure, capabilities exchange between the target device and the LMF is initiated by a request or sent as "unsolicited" information. If a request is used, the LMF sends an LPP Request Capabilities message to the target device with a request for capability information. The target device sends an LPP Provide Capabilities message. The LPP-related capabilities transferred by the target device to the LMF may refer to particular position methods or may be common to multiple position methods. In case of unsolicited capability transfer, the target device transfers LPP Provide Capabilities message without receiving the request for capability information from the LMF.

At step 2, the LMF sends a NRPPa POSITIONING INFORMATION REQUEST message to the serving gNB to request UL information for the target device. For example, the LMF sends the NRPPa POSITIONING INFORMATION REQUEST message to the serving gNB of the target device to request UE SRS configuration information. If the message includes Requested UL-SRS Transmission Characteristics, the gNB takes this information into account when configuring UL-SRS transmissions for the target device.

At step 3, the serving gNB determines the resources available for UL-SRS and configures the target device with the UL-SRS resource sets at step 3a. For example, in step 3, the serving gNB determines the UE SRS configuration to be allocated for the target device.

At step 4, the serving gNB provides the UL-SRS configuration information to the LMF in a NRPPa POSITIONING INFORMATION RESPONSE message.

At step 5a, in the case of semi-persistent or aperiodic SRS, the LMF requests activation of UE SRS transmission by sending a NRPPa Positioning Activation Request message to the serving gNB of the target device. For example, the LMF sends the NRPPa Positioning Activation Request message to the serving gNB of the target device to request UL-SRS activation for the target device. For a semi-persistent UL-SRS, the message may include an indication of an UL-SRS resource set to be activated and may include information that indicates the spatial relation for the semi-persistent UL-SRS resource to be activated. For an aperiodic UL-SRS, the message may include aperiodic SRS Resource trigger list to indicate the UL-SRS resource to be activated.

At step 5b, the gNB then activates the UE SRS transmission and, at step 5c, sends a NRPPa Positioning Activation Response message. The target device begins the UL-SRS transmission according to the time domain behavior of UL-SRS resource configuration. For example, for semi-persistent UL-SRS, the serving gNB may activate the configured semi-persistent UL-SRS resource sets by sending the SP Positioning SRS Activation/Deactivation MAC CE command. For aperiodic UL-SRS, the serving gNB may activate the configured aperiodic UL-SRS resource sets by sending the DCI. If the UL-SRS has been successfully activated, the gNB sends the NRPPa Positioning Activation Response message to the LMF.

At step 6, the LMF provides the UL information to the selected gNBs in a NRPPa MEASUREMENT REQUEST message. The message includes all information required to enable the gNBs/TRPs to perform the UL measurements.

At step 7, the LMF sends a LPP Provide Assistance Data message to the target device. The message includes any required assistance data for the target device to perform the necessary DL-PRS measurements.

At step 8, the LMF sends a LPP Request Location Information message to request Multi-RTT measurements.

At step 9a, the target device performs the DL-PRS measurements from all gNBs provided in the assistance data. At step 9b, each gNB measures the UE SRS transmissions from the target device.

At step 10, the target device reports the DL-PRS measurements for Multi-RTT to the LMF in a LPP Provide Location Information message.

At step 11, each gNB reports the UE SRS measurements to the LMF in a NRPPa Measurement Response message.

At step 12, the LMF sends a NRPPa POSITIONING DEACTIVATION message to the serving gNB. For example, the LMF sends the NRPPa Positioning Deactivation message to the serving gNB of the target device to request deactivation of UL-SRS resource sets, or release all the UL-SRS resources. This message includes an indication of the UL-SRS resource set to be deactivated, or an indication of releasing all UL-SRS resources.

The LMF may then determine the RTTs from the target device and gNB Rx-Tx time difference measurements for each gNB for which corresponding UL and DL measurements were provided and calculate (or estimate) the position of the target device.

According to the subject disclosure, the role of the UE in the Multi-RTT measurement for the non-terrestrial network is as follows: The UE receives configuration information from the LMF and serving gNB on the configurations for the positioning DL-PRS measurements and UL-SRS configuration. The UE measures the downlink signals, i.e., DL-PRS, sent by the gNB, while in the uplink, the UE replies with PRS/SRS signals transmitted at preconfigured time instants and the receive timing of the PRS/SRS will be measured by the gNB. The UE reports to the LMF a measurement of the timing difference between the path of the DL-PRS signal to the transmit timing of the UL-SRS. The measurement may be enriched by assistance information allowing the LMF to determine the RTT between the UE and the gNB (through the satellite).

Information signalled from the UE to the LMF in the terrestrial network are listed in the following Table 1.

**Table 1: Measurement results that may be transferred from UE to the LMF**

| **Information** |
|---|
| PCI, GCI, and PRS ID, ARFCN, PRS resource ID, PRS resource set ID for each measurement |
| DL-PRS-RSRP measurement |
| UE Rx-Tx time difference measurement |
| Time stamp of the measurement |
| Quality for each measurement |
| TA offset used by UE |
| UE Rx TEG IDs, UE Tx TEG IDs, and UE RxTx TEG IDs associated with UE Rx-Tx time difference measurements |
| LOS/NLOS information for UE measurements |
| DL-PRS-RSRPP measurement |
| The association of UE Tx TEG ID and SRS |

Information signalled from the gNB to the LMF in the terrestrial network are listed in the following Tables 2 to 4.

**Table 2: Assistance data that may be transferred from gNB to the LMF**

| **Information** |
|---|
| PCI, GCI, ARFCN and TRP IDs of the TRPs served by the gNB |
| Timing information of TRPs served by the gNB |
| DL-PRS configuration of the TRPs served by the gNB |
| SSB information of the TRPs (the time/frequency occupancy of SSBs) |
| Spatial direction information of the DL-PRS Resources of the TRPs served by the gNB |
| Geographical coordinates information of the DL-PRS Resources of the TRPs served by the gNB |
| TRP type |
| On-demand DL-PRS information |
| TRP Tx TEG association information |

**Table 3: UL information/UE configuration data that may be transferred from serving gNB to the LMF**

| **UE configuration data** |
|---|
| UE SRS configuration |
| SFN initialization time for the SRS configuration |

**Table 4: Measurement results that may be transferred from gNBs to the LMF**

| **Measurement results** |
|---|
| NCGI and TRP ID of the measurement |
| gNB Rx-Tx time difference measurement |
| UL-SRS-RSRP |
| UL-SRS-RSRPP |
| UL Angle of Arrival (azimuth and/or elevation) |
| Multiple UL Angle of Arrival (azimuth and/or elevation) |
| SRS Resource Type |
| Time stamp of the measurement |
| Quality for each measurement |
| Beam Information of the measurement |
| LoS/NLoS information for each measurement |
| ARP ID of the measurement |

For determining the time difference of signals at the side of the UE and at the side of the gNB, the subject disclosure applies the following measurement definitions defined in 3GPP specifications.

The UE Rx-Tx time difference is defined as follows:

| | |
|---|---|
| Definition | The UE Rx - Tx time difference is defined as T_{UE-RX} - T_{UE-TX} |
| | Where: |
| | T_{UE-RX} is the UE received timing of downlink subframe #i from a Transmission Point (TP), defined by the first detected path in time. |
| | T_{UE-TX} is the UE transmit timing of uplink subframe #j that is closest in time to the subframe #i received from the TP. |
| | Multiple DL PRS or CSI-RS for tracking resources, as instructed by higher layers, can be used to determine the start of one subframe of the first arrival path of the TP. |
| | For frequency range 1, the reference point for T_{UE-RX} measurement shall be the Rx antenna connector of the UE and the reference point for T_{UE-TX} measurement shall be the Tx antenna connector of the UE. For frequency range 2, the reference point for T_{UE-RX} measurement shall be the Rx antenna of the UE and the reference point for T_{UE-TX} measurement shall be the Tx antenna of the UE. |
| **Applicable for** | RRC_CONNECTED, |
| | RRC INACTIVE |

The gNB Tx-Rx time difference is defined as follows:

| | |
|---|---|
| **Definition** | The gNB Rx - Tx time difference is defined as T_{GNB-RX} - T_{GNB-TX} |
| | Where: |
| | T_{gNB-RX} is the Transmission and Reception Point (TRP) received timing of uplink subframe #i containing SRS associated with UE, defined by the first detected path in time. |
| | T_{GNB-TX} is the TRP transmit timing of downlink subframe #j that is closest in time to the subframe #i received from the UE. |
| | Multiple SRS resources can be used to determine the start of one subframe containing SRS. |
| | The reference point for T_{GNB-RX} shall be: |
| | - for type 1-C base station: the Rx antenna connector, |
| | - for type 1-O or 2-O base station: the Rx antenna (i.e. the centre location of the radiating region of the Rx antenna), |
| | - for type 1-H base station: the Rx Transceiver Array Boundary connector. |
| | The reference point for T_{gNB-TX} shall be: |
| | - for type 1-C base station: the Tx antenna connector, |
| | - for type 1-O or 2-O base station: the Tx antenna (i.e. the centre location of the radiating region of the Tx antenna), |
| | - for type 1-H base station: the Tx Transceiver Array Boundary connector. |

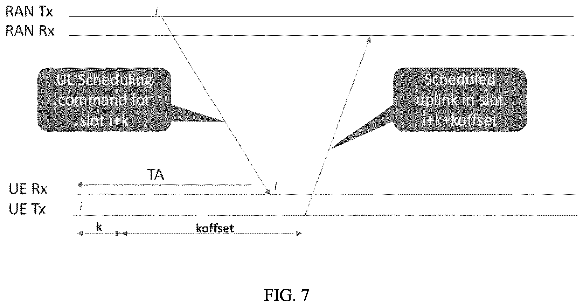

According to the subject disclosure, it is assumed that the UE Tx-Rx time may be defined based on different options, where one option is to report the time compensated by an offset, where an offset can be for instance K_{offset}. Normally the scheduling command is scheduling uplink in slot *n*+*K,* but as delays are larger in the non-terrestrial network the K_{offset} is added. This is illustrated in FIG. 7, where a scheduled command is given for slot *i*+*k,* where k is a rather low value. As the UE pulls slot I backwards by timing advance (TA), slot *i*+*k* has passed when the UE received the UL scheduling command. Therefore, the subject disclosure assumes the K_{offset} to correct for the larger RTT. K_{offset} is a configured scheduling offset that need to be larger or equal to the sum of the service link RTT and the common TA. In order to keep delays as short as possible, K_{offset} should be set as close as possible to sum of the service link RTT and the common TA.

The Multi-RTT measurements in non-terrestrial networks as discussed above relies on the UE/gNB reporting the Tx and Rx time difference measurements. Based on these measurements and considering additional assistance information, the LMF estimates the UE position. To ensure the calculation accuracy, the network needs to be aware of the propagation delays drift to compensate the propagation delays and minimize the errors.

Among these time offsets impacting the Multi-RTT measurements, there is the TA, which for a transparent payload in non-terrestrial networks, is composed by two parts: the common TA and the UE-specific TA. The common TA accounts for the RTT between a satellite and a reference point, where the reference point may be placed anywhere between a gNB on the ground to the satellite, and is broadcast as part of SIB together with its validity duration. The UE-specific TA refers to the service link RTT and is estimated by the UE based on its own position and the satellite ephemeris (provided in SIB). This means that a UE in non-terrestrial networks will update its TA based on: i) a new update of its position (a GNSS update), ii) an update of the satellite position (based on the provided satellite ephemeris information), or iii) the common TA, which is based on a combination of "time" and the common TA parameters provided by the SIB, which the UE updates.

However, the network (e.g., RAN) does not know the timing of when the UE performs the updates and will not be able to remove any potential error this may cause in the RTT estimate if the update happens between the Rx and Tx of the Multi-RTT signals within a single UE measurement period or interval. In addition, the RTT measurements are unreliable due to the fact that how much the TA value can change until Multi-RTT measurements are no longer valid are not known.

The subject disclosure provides mechanisms for signalling TA adjustment during RTT measurement in non-terrestrial network which aims to address the above problem. The subject disclosure aims to address the problem achieving RTT measurements to become more reliable. For example, the terminal node (e.g., UE) provides means for the network (e.g., RAN) to know that the terminal node has updated the TA autonomously during the RTT measurement (i.e., between the UE Tx and Rx related to the Multi-RTT measurement) if the update is larger than a threshold (i.e., exceeds the threshold).

The mechanisms according to the subject disclosure comprise one or more of the following aspects: The network (e.g., the network node) defines a threshold (e.g., a TA_change_threshold) in time on how much the TA is allowed to be adjusted by the terminal node before actions need to be triggered. The threshold may be sent in SIB or by direct signaling (i.e., RRC) to the terminal node. The terminal node provides indication to the network if the TA exceeds the threshold, the indication indicates to the network that the RTT measurement may be not valid. The terminal node performs SIB acquisitions upon reception of UE PRS configuration to force the terminal node to update system information, thereby ensuring the validity of the information required to autonomously estimate satellite movement and TA during the RTT measurement.

According to some examples, if the terminal node performs a TA adjustment during the RTT measurement, which is larger than the threshold, the terminal node does not send the uplink PRS, thereby allowing the network to detect the lack/absence of the uplink PRS. According to some other examples, if the terminal node performs a TA adjustment during the RTT measurement, which is larger than the threshold, the terminal node transmits the (expected) uplink PRS, but at the same time triggers additional signaling on the lower layers to notify the network that the measurement may not be correct. In one example, the terminal node sends a service request (SR) to the network to indicate need for redoing the RTT measurement. The SR may be transmitted on reserved resources that are associated to the PRS transmission to provide the network with indication that the RTT measurement may not be correct. In another example, the terminal node generates a MAC CE to inform the network that the RTT measurement may not be correct. According to still other examples, if the terminal node performs a TA adjustment during the RTT measurement, which is larger than the threshold, the terminal node sends the uplink PRS with a different pattern or on another (pre-configured) resource, which is different in time, frequency, or code domain. In one example, the terminal node is pre-configured with two uplink PRS patterns where the first pattern is meant for normal uplink PRS transmissions, and the alternative pattern is used to indicate that the TA adjustment is larger than the threshold. According to yet other examples, the terminal node provides the network with the applied TA adjustment (e.g., N_{TA}, _{adj}^{common}) as part of the assistance information, such that the network can take the applied TA adjustment into account.

Now, exemplary methods for signalling TA adjustment during RTT measurement in non-terrestrial network according to some embodiments of the subject disclosure will be described.

FIG. 8 illustrates a flowchart of a method 800 or process for signalling TA adjustment during RTT measurement in non-terrestrial network according to some embodiments.

The method 800 is performed by a terminal node such as a user device (e.g., user equipment (UE)), or by an apparatus for use in a terminal node. In some examples, the terminal node may be represented by any one of the wireless devices, such as UE 110A of the wireless network 100 as described above with reference to FIG. 1, or the wireless device 110 as described above with reference to FIG. 2, or the user equipment of the non-terrestrial network as described above with reference to FIG. 4.

The user device 110 is connected to, and served by, the network 100. More specifically, the user device 110 is located in an area (i.e., a cell 115) served by the base station (e.g., gNBs 120A, 120B) and uses services provided by the network 100. For example, the network 100 may include a network node (e.g., network node 130) or network function, providing a Location Management Function (LMF). The LMF is the network entity in the 5G Core Network (5GC) supporting the functionality such as location determination for the user device, downlink/uplink location measurements or a location estimate.

The method 800 starts at block 820. At block 820, during the (Multi-)RTT measurement as described above, the terminal node performs a timing advance (TA) adjustment. For example, during the procedure for Multi-RTT positioning as described above with reference to FIG. 6 (e.g., in step 9a), the terminal node may perform the TA adjustment. If the TA adjustment exceeds a threshold, the terminal node provides an indication to the network node at block 830. The indication relates to the RTT measurement and is to indicate to the network node that the TA adjustment exceeds the threshold. The threshold may comprise a TA change threshold defining in time on how much TA is allowed to be adjusted by the terminal node before the indication is to be provided to the network node. For example, the terminal node may determine whether the TA adjustment exceeds the threshold (i.e., whether the change of the TA is larger than the threshold) and provides the indication based on the result of the determination. In some examples, as will be described in more detail hereinbelow, the indication may be explicit or implicit.

Additionally, or alternatively, the method 800 may comprise deciding whether to provide an indication relating to the TA adjustment to the network node based on a configuration information. For example, the terminal node may determine whether the threshold is configured or not. If the terminal node determines that the threshold is not configured or not present in the configuration information, the terminal node may decide that the indication is not to be provided to the network node. On the other hand, if the terminal node determines that the threshold is configured or present in the configuration information, the terminal node may decide that the indication is to be provided to the network node in order to indicate to the network node that the TA adjustment has been performed (i.e., the TA is changed). In yet one example, if the terminal node determines that the threshold is not configured or is not present in the configuration information, the terminal node may decide that the indication is to be provided to the network node whenever an adjustment is performed, in order to indicate to the network node that the TA adjustment has been performed (i.e., the TA is changed). In yet one example, if the terminal node determines that the threshold is not configured or is not present in the configuration information, the terminal node may decide that the threshold has a default (preconfigured) value, which can be zero or non-zero. Then, an indication is to be provided to the network node whenever an adjustment exceeding the preconfigured threshold is performed, in order to indicate to the network node that the TA adjustment has been performed (i.e., the TA is changed). In response to performing the TA adjustment during the RTT measurement, the terminal node provides the indication to the network node, thereby informing the network node that the TA is changed. Additionally, if the terminal node determines that the threshold is configured to a particular value, the terminal node may decide that the indication is to be provided to the network node in case the TA adjustment exceeds the threshold (i.e., if the change of the TA is larger than the threshold) as described above.

In some examples, the terminal node may receive the threshold from the network node. The threshold may be received in a system information broadcast (SIB) or in a Radio Resource Control (RRC) message. In other examples, the threshold may be configured on the terminal node in accordance with configuration information defined by the 3GPP standard, determined by the terminal node, or received from the network.

In some examples, the indication provided in block 830 may be implicit. In these examples, the terminal node may prevent to transmit an uplink positioning reference signal (PRS) to the network node. According to the procedure for Multi-RTT positioning, the network node may expect to receive the uplink PRS. The absence or lack of the uplink PRS indicates to the network node that the TA adjustment performed by the terminal node exceeds the threshold. Thereby, the network node is informed that the RTT measurement may be not valid and that a new RTT measurement is to be performed (i.e., the procedure for Multi-RTT positioning or at least parts thereof need to be newly performed).

In other examples, the indication provided in block 830 may be explicit. For example, the terminal node may transmit the uplink PRS to the network node and provide a notification to the network node. By the notification, the network node is informed that the TA adjustment performed by the terminal node exceeds the threshold such that the RTT measurement may be not valid and therefore may need to be re-done. The notification may be provided by the terminal node on lower layers to the network node.

As an example of the notification, the terminal node may transmit a scheduling request (SR) to the network node. By the SR, the network node is informed that the RTT measurement may be not valid. The terminal node may transmit the SR on a resource that is associated to a PRS transmission. That is, if the network node receives the SR on a resource that is associated to and used for transmission of the PRS, the network node assumes that the RTT measurement may be not valid. As another example of the notification, the terminal node may generate a medium access control (MAC) structure carrying control information (e.g., MAC CE) to inform the network node that the RTT measurement may be not valid and transmit the MAC structure to the network node. The MAC structure is to inform the network node that the RTT measurement may be not valid.

Other examples of providing the indication in block 830 (i.e., explicit indication) comprise the terminal node transmits the uplink PRS including a predetermined PRS pattern to the network node. The predetermined PRS pattern is designed to indicate, to the network node, that the RTT measurement may be not valid. That is, if the network node receives the uplink PRS and determines that the uplink PRS includes the predetermined PRS pattern, the network node assumes that the RTT measurement may be not valid and that a new RTT measurement is to be performed. In these examples, at least two different PRS patterns may be configured on the terminal node, one of the two PRS patterns is to be used for normal uplink PRS transmission and the other, being the predetermined PRS pattern, is to be used to indicate that the RTT measurement may be not valid. That is, the predetermined PRS pattern is used when the TA adjustment exceeds the threshold, thereby indicating to the network node that the RTT measurement may be not valid. The other PRS pattern is used when the TA adjustment does not exceed the threshold and the RTT measurement proceeds with transmitting the normal uplink PRS to the network node.

In still other examples of providing the indication in block 830 (i.e., explicit indication), the terminal node transmits the uplink PRS on a predetermined resource to the network node. The predetermined resource is designed to indicate, to the network node, that the RTT measurement may be not valid. That is, if the network node receives the uplink PRS on the predetermined resource, the network node assumes that the RTT measurement may be not valid and that a new RTT measurement is to be performed. In these examples, at least two different resources for PRS transmission may be configured on the terminal node, one of the two resources is to be used for normal uplink PRS transmission and the other, being the predetermined resource, is to be used to indicate that the RTT measurement may be not valid. That is, the predetermined resource is used when the TA adjustment exceeds the threshold, thereby indicating to the network node the RTT measurement may be not valid. The other resource is used when the TA adjustment does not exceed the threshold and the RTT measurement proceeds with transmitting the normal uplink PRS to the network node. In these examples, the resources may differ in at least one of time, frequency or code domain.

In other examples, the indication in block 830 may comprise transmitting, from the terminal node to the network node, assistance information including the TA adjustment. Thereby, the assistance information indicates to the network node that the RTT measurement may be not valid and that a new RTT measurement is to be performed. That is, the assistance information may include the indication that the TA adjustment exceeds the threshold. In other examples, the assistance information may include the TA adjustment (i.e., the assistance information may include a value indicating the change of the TA).

In some examples, the method 800 may further comprise acquiring a system information broadcast (SIB) from the network node and updating system information based on the system information broadcast at block 810. For example, upon receiving a PRS configuration from the network node, the terminal node may acquire the SIB. For example, the terminal may send a request to acquire the SIB to the network node. Upon receiving the SIB, the terminal node may update system information stored at the terminal node based on the received SIB, thereby ensuring validity of information required for the TA adjustment during the RTT measurement.

In some examples of the method 800, the threshold may be set to a value. The value may be a time value (such as a time value in milliseconds) defining in time how much the terminal node is allowed to adjust the TA before the network node is to be informed about the TA adjustment. For example, the threshold may be set to a value of 0. If the terminal node performs the TA adjustment during the RTT measurement, the terminal node determines whether the TA adjustment exceeds the threshold. Since the threshold is set to 0, any TA adjustment (i.e., a TA adjustment larger than 0) will be determined to exceed the threshold such that the terminal node provides the indication to the network node. The indication indicates to the network node that the terminal node performed the TA adjustment, and that the TA adjustment exceeds the threshold. If, however, the terminal node performs no TA adjustment (i.e., the TA adjustment is 0), the terminal node determines that the TA adjustment does not exceed the threshold and does not provide the indication to the network node. In other examples, the threshold may be set to a value greater than 0. In these examples, the terminal node provides the indication to the network node if the TA adjustment is greater than the value (i.e., the TA adjustment exceeds the threshold). In such examples, if the terminal node determines that the TA adjustment is equal to or lower than the threshold (i.e., the value), the terminal node does not provide the indication to the network node.

In some other examples, the terminal node may determine whether the TA adjustment is equal to or greater than the threshold. That is, the terminal node provides the indication to the network node if the TA adjustment is equal to or greater than the threshold but does not provide the indication if the TA adjustment is lower than the threshold. For example, if the threshold is set to a value of 0, the terminal node provides the indication in case the TA adjustment is performed during the RTT measurement. That is, only if the terminal node does not perform the TA adjustment, the terminal node does not provide the indication to the network node.

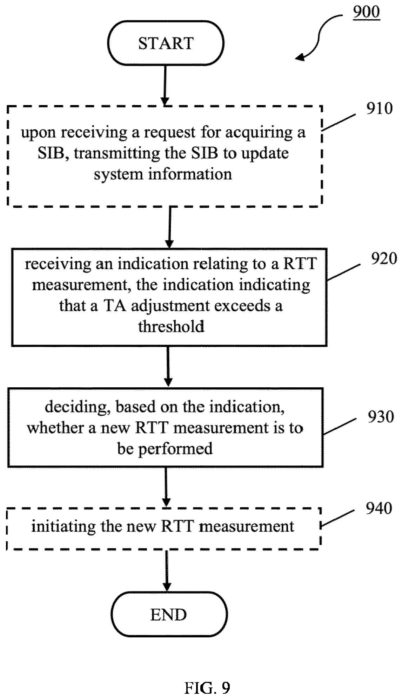

FIG. 9 illustrates a flowchart of a method 900 or process for signalling TA adjustment during RTT measurement in non-terrestrial network according to some embodiments.

The method 900 is performed by a network, or by an apparatus for use in a network. More specifically, the method 900 may be performed by a network node or network function (e.g., gNB, LMF) or by an apparatus for use in a network node. For example, the network node may be represented by any one of the networks nodes, such as gNBs 120A-120B or network node 130 of the wireless network 100 as described above with reference to FIG. 1, or the network node 120/130 as described above with reference to FIG. 3, or the gateway or satellite of the non-terrestrial network as described above with reference to FIG. 4.

The user device 110 is connected to, and served by, the network 100. More specifically, the user device 110 is located in an area (i.e., a cell 115) served by the base station (e.g., gNBs 120A, 120B) and uses services provided by the network 100. For example, the network 100 may include a network node (e.g., network node 130) or network function, providing a Location Management Function (LMF). The LMF is the network entity in the 5G Core Network (5GC) supporting the functionality such as location determination for the user device, downlink/uplink location measurements or a location estimate.

The method 900 starts at block 920. At block 920, the network node receives an indication relating to a RTT measurement from the terminal node. The indication indicates that a TA adjustment performed by the terminal node during the RTT measurement exceeds a threshold. For example, during the procedure for Multi-RTT positioning as described above with reference to FIG. 6 (e.g., in step 9a), the terminal node may perform the TA adjustment. If the TA adjustment exceeds a threshold, the terminal node provides an indication to the network node. The indication relates to the RTT measurement and is to indicate to the network node that the terminal node performed the TA adjustment which exceeds the threshold. The threshold may comprise a TA change threshold defining in time on how much TA is allowed to be adjusted by the terminal node before the indication is to be provided to the network node. For example, the indication indicates to the network node that the TA adjustment performed by the terminal node exceeds the threshold (i.e., the change of the TA is larger than the threshold). In some examples, as will be described in more detail hereinbelow, the indication may be explicit or implicit. At block 930, the network node decides, based on the indication, whether a new RTT measurement is to be performed. Due to the TA adjustment exceeding the threshold, the RTT measurement may be determined by the network node to be not valid, requiring the new RTT measurement to be performed. For example, if the network node receives the indication from the terminal node, the network node may decide to perform the new RTT measurement. Based on the result of the decision, the network node may initiate the new RTT measurement (e.g., the procedure for Multi-RTT positioning or at least parts thereof is initiated again) at block 940.

In some examples, the network node may transmit the threshold to the terminal node. Thereby, the network node configures the threshold on the terminal node and thus whether the terminal provides the indication relating to the RTT measurement. The threshold may be transmitted in a system information broadcast (SIB) or in a Radio Resource Control (RRC) message. In other examples, the threshold may be configured on the terminal node in accordance with configuration information defined by the 3GPP standard, determined by the terminal node, or received from the network.

In some examples, the indication received in block 920 may be implicit. In these examples, the network node expecting to receive an uplink PRS from the terminal node determines that no uplink PRS is received. Upon determining that no uplink PRS is received, the network node determines that the indication is provided. That is, absence or lack of the uplink PRS indicates to the network node that the TA adjustment performed by the terminal node exceeds the threshold. Thereby, the network node is informed that the RTT measurement may be not valid and that the new RTT measurement is to be performed. For example, the network node may start a timer in response to transmitting a downlink PRS to the terminal node. If the network node determines that the timer elapsed without receiving the uplink PRS from the terminal node (i.e., without receiving "return" signalling from the terminal node), the network node determines that the terminal node performed the TA adjustment exceeding the threshold and that the RTT measurement may be not valid (i.e., that a new RTT measurement is to be performed).

In other examples, the indication received in block 920 may be explicit. For example, the network node may receive the uplink PRS and a notification from the terminal node. By the notification, the network node is provided with the indication that the TA adjustment performed by the terminal node exceeds the threshold and that the RTT measurement may be not valid. The notification may be received by the network node on lower layers.

As an example of the notification, the network node may receive a scheduling request (SR) from the terminal node. By the SR, the network node is informed that the RTT measurement may be not valid. The network node may receive the SR on a resource that is associated to a PRS transmission. That is, if the network node receives the SR on a resource that is associated to and used for transmission of the PRS, the network node assumes that the RTT measurement may be not valid. As another example of the notification, the network node may receive a medium access control (MAC) structure carrying control information (e.g., MAC CE). The MAC structure is to indicate that the RTT measurement may be not valid.

Other examples of receiving the indication in block 920 (i.e., explicit indication) comprise that the network node receives the uplink PRS including a predetermined PRS pattern from the terminal node. The predetermined PRS pattern is designed to indicate that the RTT measurement may be not valid. That is, if the network node receives the uplink PRS and determines that the uplink PRS includes the predetermined PRS pattern, the network node assumes that the RTT measurement may be not valid and that a new RTT measurement is to be performed. In these examples, at least two different PRS patterns may be configured on the terminal node, one of the two PRS patterns is to be used for normal uplink PRS transmission and the other, being the predetermined PRS pattern, is to be used to indicate that the RTT measurement may be not valid. That is, the predetermined PRS pattern is used when the TA adjustment exceeds the threshold, thereby indicating that the RTT measurement may be not valid. The other PRS pattern is used when the TA adjustment does not exceed the threshold and the RTT measurement proceeds with transmitting the normal uplink PRS.

In still other examples of receiving the indication in block 920 (i.e., explicit indication), the network node receives the uplink PRS on a predetermined resource from the terminal node. The predetermined resource is designed to indicate that the RTT measurement may be not valid. That is, if the network node receives the uplink PRS on the predetermined resource, the network node assumes that the RTT measurement may be not valid and that a new RTT measurement is to be performed. In these examples, at least two different resources for PRS transmission may be configured on the terminal node, one of the two resources is to be used for normal uplink PRS transmission and the other, being the predetermined resource, is to be used to indicate that the RTT measurement may be not valid. That is, the predetermined resource is used when the TA adjustment exceeds the threshold, thereby indicating that the RTT measurement may be not valid. The other resource is used when the TA adjustment does not exceed the threshold and the RTT measurement proceeds with transmitting the normal uplink PRS. In these examples, the resources may differ in at least one of time, frequency, or code domain.

In other examples, the indication in block 920 may comprise receiving, from the terminal node, assistance information including the TA adjustment. Thereby, the assistance information indicates to the network node that the RTT measurement may be not valid and that a new RTT measurement is to be performed. That is, the assistance information may include the indication that the TA adjustment exceeds the threshold. In other examples, the assistance information may include the TA adjustment (i.e., the assistance information may include a value indicating the change of the TA).

In some examples, the method 900 may further comprise transmitting a PRS configuration to the terminal node. The network node further transmits a system information broadcast (SIB) to the terminal node at block 910. The terminal node uses the SIB to update system information, thereby ensuring validity of information required for the TA adjustment during the RTT measurement. In some examples, the network node may transmit the SIB in response to receiving a request for acquiring the SIB from the terminal node.

In some examples, as described above, the threshold may be set to a value. The value may be a time value (such as a time value in milliseconds) defining in time how much the terminal node is allowed to adjust the TA before the network node is to be informed about the TA adjustment. For example, the threshold may be set to a value of 0. If the terminal node performs the TA adjustment during the RTT measurement and determines that the TA adjustment exceeds the threshold, the network node receives the indication. The indication indicates that the terminal node performed the TA adjustment, and that the TA adjustment exceeds the threshold. If, however, the terminal node determines that the TA adjustment does not exceed the threshold (e.g., the terminal node performs no TA adjustment) and does not provide the indication, the network node does not receive the indication.

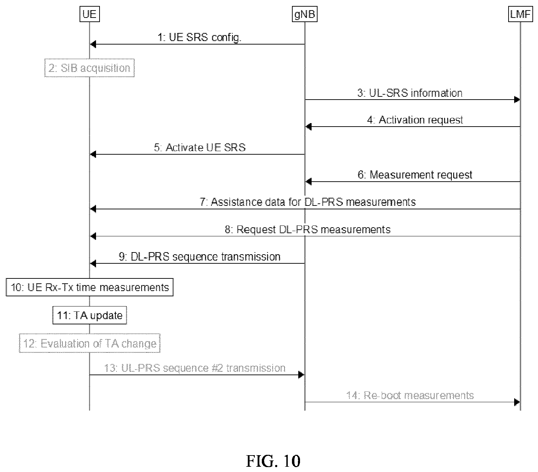

Exemplary message sequence diagrams of the methods or processes for signalling TA adjustment during RTT measurement in non-terrestrial network according to some embodiments, will now be described with reference to FIGS. 10 to 12.

FIG. 10 shows an exemplary message sequence diagram of a method or process for signalling TA adjustment during RTT measurement in non-terrestrial network according to some embodiments of the subject disclosure. More specifically, the exemplary message sequence diagram of FIG. 10 concerns the embodiment wherein the indication relating to the RTT measurement and indicating that the TA adjustment exceeds the threshold is provided to the network node by preventing to transmit the uplink PRS.

The exemplary message sequence diagram illustrates the messages exchanged between the terminal node (e.g., UE) and network nodes (e.g., the serving gNB and the LMF) in the non-terrestrial network during the RTT measurement, and operations performed by the terminal node and the network nodes.

At step 1, the UE receives configuration information relating to the RTT measurement from the LMF and the serving gNB. Step 1 may correspond to step 3a as described above with reference to FIG. 6. For example, the configuration information concerns configurations for positioning downlink PRS measurements (DL-PRS measurements) and uplink PRS configuration (UL-PRS configuration). It is to be noted that PRS-related information may also comprise Sounding Reference signal (SRS)-related information. The configuration may therefore also be referred to as UE SRS configuration information.

Optionally, at step 2, the UE may perform a procedure for acquiring system information broadcast (SIB) to ensure validity of information required for the RTT measurement. According to the procedure, the UE may acquire the SIB from the network upon receiving the configuration information (e.g., the UE SRS configuration information). For example, the UE may send a request for SIB to the network (e.g., towards the gNB). The UE may receive the SIB from the network (e.g., from the gNB). In response to receiving the SIB, the UE may update system information based on the received SIB, thereby ensuring the validity of information required for the RTT measurement (e.g., for a TA adjustment to be performed during the RTT measurement). Step 2 corresponds to step 810 of FIG. 8 and step 910 of FIG. 9.

At step 3, the gNB transmits the UL-SRS information to the LMF. Step 3 may correspond to step 3 as described above with reference to FIG. 6.

At step 4, the LMF transmits an activation request to the gNB. Step 4 may correspond to step 4a as described above with reference to FIG. 6.

At step 5, the gNB transmits an activate UE SRS message to the UE. Step 5 may correspond to step 5b as described above with reference to FIG. 6.

At step 6, the LMF transmits a measurement request to the gNB. Step 6 may correspond to step 6 as described above with reference to FIG. 6.

At step 7, the LMF transmits assistance data for DL-PRS measurements to the UE. Step 7 may correspond to step 7 as described above with reference to FIG. 6.

At step 8, the LMF transmit a request for DL-PRS measurements to the UE. Step 8 may correspond to step 8 as described above with reference to FIG. 6

At step 9, the UE receives a DL-PRS sequence transmission from the gNB. Step 9 may correspond to step 9 as described above with reference to FIG. 6.

At step 10, the UE performs RTT measurements. For example, the UE may perform Tx-Rx time measurements as described above.

At step 11, the UE determines whether to perform a timing advance (TA) adjustment based on the Tx-Rx time measurements. Based on the result of the determination, the UE may perform the TA adjustment. Step 11 corresponds to step 820 of FIG. 8.

At step 12, the UE determines whether the TA adjustment performed in step 11 exceeds a threshold.

At step 13, the UE provides an indication relating to the RTT measurement to the gNB. Step 13 corresponds to step 830 of FIG. 8 and step 920 of FIG. 9. As described above, the indication may be implicit. For example, if the UE determines in step 12 that the TA adjustment exceeds the threshold, the UE may prevent to transmit an UL-PRS sequence to the gNB. If the gNB which expects to receive the UL-PRS sequence (i.e., the UL-PRS transmission) in response to the DL-PRS sequence transmission, the absence or lack of the UL-PRS sequence indicates to the gNB that the TA adjustment exceeded the threshold and that therefore the RTT measurement may be not valid. Otherwise, if the UE determines in step 12, that the TA adjustment does not exceed the threshold, the UE may transmit the normal UL PRS sequence, as expected by the gNB.

Based on the absence or lack of the UL-PRS sequence, the gNB may decide to perform a new RTT measurement as described above with reference to step 930 of FIG. 9 and indicates the result of the determination (i.e., indicate re-boot measurements) to the LMF at step 14. Upon receiving the re-boot measurements, the LMF may initiate the new RTT measurement as described above with reference to step 940 of FIG. 9.

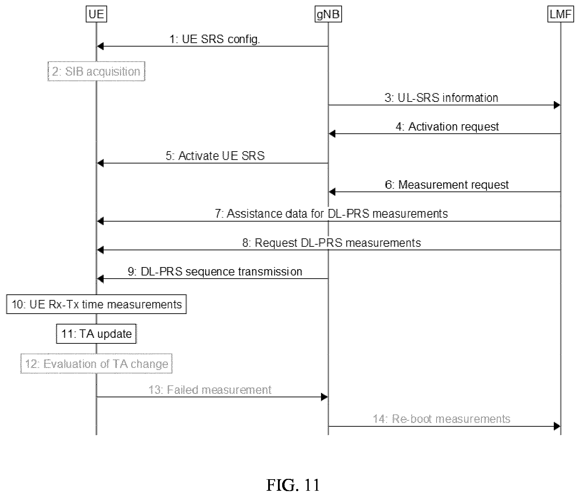

FIG. 11 shows an exemplary message sequence diagram of a method or process for signalling TA adjustment during RTT measurement in non-terrestrial network according to some embodiments of the subject disclosure. More specifically, the exemplary message sequence diagram of FIG. 11 concerns the embodiment wherein the indication relating to the RTT measurement and indicating that the TA adjustment exceeds the threshold is provided to the network node by providing a notification or transmitting the uplink PRS using different PRS pattern or on different resources for PRS transmission.

The exemplary message sequence diagram illustrates the messages exchanged between the terminal node (e.g., UE) and network nodes (e.g., the serving gNB and the LMF) in the non-terrestrial network during the RTT measurement, and operations performed by the terminal node and the network nodes. Steps 1 to 12 correspond to steps 1 to 12 as described above with reference to FIG. 10.

At step 13, the UE provides an indication relating to the RTT measurement to the gNB (designated failed measurement). Step 13 corresponds to step 830 of FIG. 8 and step 920 of FIG. 9. As described above, the indication may be explicit. For example, if the UE determines in step 12 that the TA adjustment exceeds the threshold, the UE transmits the UL-PRS sequence and provides a notification that the RTT measurement may be not valid (i.e., the RTT measurement may have failed) to the gNB. For example, the UE may provide the notification by transmitting a scheduling request (SR) or a medium access control (MAC) structure carrying control information (e.g., MAC CE) to the gNB. The SR indicates to the gNB that a new RTT measurement is to be performed. The SR may be transmitted by the UE on a resource associated with the transmission of the PRS. On the other hand, the MAC structure may be generated by the UE to carry control information that indicates to the gNB that a new RTT measurement is to be performed. In other examples, if the UE determines in step 12 that the TA adjustment exceeds the threshold, the UE transmits the UL-PRS sequence including a predetermined PRS pattern and/or on a predetermined resource for PRS transmission to the gNB. As described above, the predetermined PRS pattern is designed to indicate that the RTT measurement may be not valid (i.e., the RTT measurement may have failed). The predetermined PRS pattern differs from a PRS pattern that is used by the UE when the TA adjustment does not exceed the threshold and thus for the normal UL-PRS transmission to the gNB. As also described above, the predetermined resource is designed to indicate that the RTT measurement may be not valid (i.e., the RTT measurement may have failed). The predetermined resource differs from another resource that is used by the UE when the TA adjustment does not exceed the threshold and thus for the normal UL-PRS transmission to the gNB. The resources used for PRS transmission differ in at least one of time, frequency, or code domain. If the UE determines in step 12, that the TA adjustment does not exceed the threshold, the UE may transmit the normal UL PRS sequence, as expected by the gNB (e.g., including the PRS pattern used for normal UL-PRS transmission and/or transmitted on a resource used for normal UL-PRS transmission).

Based on the notification (e.g., the SR), or based on the PRS pattern or the PRS resource used in the PRS transmission, the gNB may decide to perform a new RTT measurement as described above with reference to step 930 of FIG. 9 and indicates the result of the determination (i.e., indicate re-boot measurements) to the LMF at step 14. Upon receiving the re-boot measurements, the LMF may initiate the new RTT measurement as described above with reference to step 940 of FIG. 9.

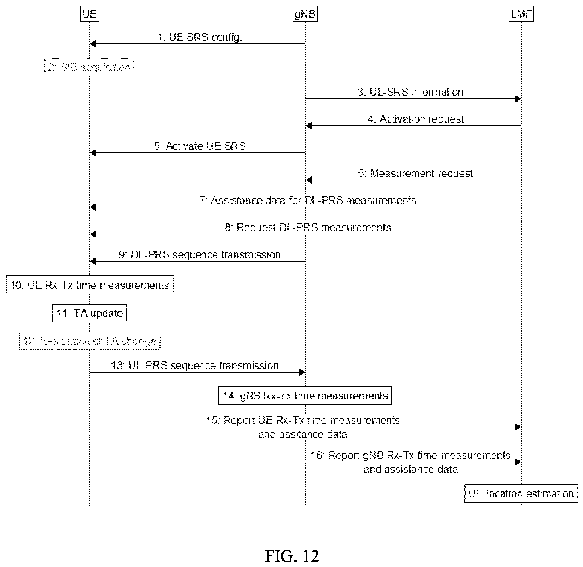

FIG. 12 shows an exemplary message sequence diagram of a method or process for signalling TA adjustment during RTT measurement in non-terrestrial network according to some embodiments of the subject disclosure. More specifically, the exemplary message sequence diagram of FIG. 12 concerns the embodiment wherein the indication relating to the RTT measurement and indicating that the TA adjustment exceeds the threshold is provided to the network node by transmitting assistance information including the TA adjustment to indicate that the RTT measurement may be not valid.

The exemplary message sequence diagram illustrates the messages exchanged between the terminal node (e.g., UE) and network nodes (e.g., the serving gNB and the LMF) in the non-terrestrial network during the RTT measurement, and operations performed by the terminal node and the network nodes. Steps 1 to 12 correspond to steps 1 to 12 as described above with reference to FIG. 10.

At step 13, the UE provides an indication relating to the RTT measurement to the gNB. Step 13 corresponds to step 830 of FIG. 8 and step 920 of FIG. 9. As described above, the indication may be explicit. For example, if the UE determines in step 12 that the TA adjustment exceeds the threshold, the UE transmits the UL-PRS sequence to the gNB. Similar to the UE at step 10, the gNB performs Rx-TX time measurements at step 14. The UE may further transmit assistance information (e.g., assistance data) to the LMF in step 15. The assistance information may be transmitted to the LMF together with the results of the Rx-Tx time measurements. The assistance information indicates to the LMF that the RTT measurement may be not valid and that a new RTT measurement is to be performed. For example, the assistance information may include the TA adjustment (i.e., the assistance information may include a value indicating the change of the TA). Similar to the UE at step 15, the gNB transmits assistance information and the result of the Rx-Tx time measurements at step 16.

Finally, based on the Rx-Tx time measurements and the assistance information received from the UE and the gNB, the LMF performs a location estimation related to the UE.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to LTE and 5G NR, similar principles can be applied in relation to other networks and communication systems where enforcing fast connection re-establishment is required. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes exemplary embodiments, there are several variations and modifications which may be made to the disclosed solution without departing from the scope of the subject disclosure.

In general, the various exemplary embodiments may be implemented in hardware or special purpose circuits, software, logic, or any combination thereof. Some aspects of the subject disclosure may be implemented in hardware, while other aspects may be implemented in firmware or software which may be executed by a controller, microprocessor, or other computing device, although the subject disclosure is not limited thereto. While various aspects of the subject disclosure may be illustrated and described as block diagrams, flow charts, or using some other pictorial representation, it is well understood that these blocks, apparatus, systems, techniques, or methods described herein may be implemented in, as non-limiting examples, hardware, software, firmware, special purpose circuits or logic, general purpose hardware or controller or other computing devices, or some combination thereof.

Example embodiments of the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the figures may represent program steps, or interconnected logic circuits, blocks and functions, or a combination of program steps and logic circuits, blocks, and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory, and removable memory. The data processors may be of any type suitable to the local technical environment, and may comprise one or more of general-purpose computers, special purpose computers, microprocessors, digital signal processors (DSPs), application specific integrated circuits (ASICs), FPGA, gate level circuits and processors based on multi-core processor architecture, as non-limiting examples.

Example embodiments of the subject disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of the subject disclosure. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of the subject disclosure as defined in the appended claims. Indeed, there is a further embodiment comprising a combination of one or more embodiments with any of the other embodiments previously discussed.

## Claims

1. A method performed by a terminal node in a non-terrestrial network, comprising:
- performing a timing advance (TA) adjustment during a round trip time (RTT) measurement;
- in response to the TA adjustment exceeding a threshold, providing, to a network node, an indication relating to the RTT measurement to indicate that the TA adjustment exceeds the threshold.

2. The method of claim 1, further comprising:
- receiving, from the network node, the threshold.

3. The method of claim 2, wherein the threshold is received in a system information broadcast or in a Radio Resource Control (RRC) message.

4. The method of any of claims 1 to 3, wherein the threshold comprises a TA change threshold defining in time on how much TA is allowed to be adjusted by the terminal node before the indication is to be provided to the network node.

5. The method of any of claims 1 to 4, wherein providing the indication comprises:
- preventing to transmit, to the network node, an uplink positioning reference signal (PRS) to indicate to the network node that the RTT measurement may be not valid.

6. The method of any of claims 1 to 4, wherein providing the indication comprises:
- transmitting, to the network node, an uplink positioning reference signal (PRS); and
- providing, to the network node, a notification that the RTT measurement may be not valid.

7. The method of claim 6, wherein providing the notification comprises:
- transmitting, to the network node, a scheduling request to indicate, to the network node, that a new RTT measurement is to be performed.

8. The method of claim 7, wherein transmitting the scheduling request comprises:
- transmitting the scheduling request on a resource associated to a transmission of PRS.

9. The method of claim 6, wherein providing the notification comprises:
- generating a medium access control (MAC) structure carrying control information to inform the network node that the RTT measurement may be not valid; and
- transmitting, to the network node, the MAC structure to indicate, to the network node, that a new RTT measurement is to be performed.

10. The method of any of claims 1 to 4, wherein providing the indication comprises:
- transmitting, to the network node, an uplink positioning reference signal (PRS) including a predetermined PRS pattern, wherein the predetermined PRS pattern is used when the TA adjustment exceeds the threshold and indicates, to the network node, that a new RTT measurement is to be performed, and another PRS pattern is used when the TA adjustment does not exceed the threshold.

11. The method of any of claims 1 to 4, wherein providing the indication comprises:
- transmitting, to the network node, an uplink positioning reference signal (PRS) on a predetermined resource, wherein the predetermined resource is used when the TA adjustment exceeds the threshold and indicates, to the network node, that a new RTT measurement is to be performed, and another resource is used when the TA adjustment does not exceed the threshold.

12. The method of any of claims 1 to 4, wherein providing the indication comprises:
- transmitting, to the network node, assistance information including the TA adjustment to indicate, to the network node, that the RTT measurement may be not valid.

13. The method of any of claims 1 to 12, further comprising:
- upon receiving a PRS configuration, acquiring, from the network node, a system information broadcast;
- upon receiving, from the network node, the system information broadcast, updating system information based on the system information broadcast.

14. An apparatus, comprising:
at least one processor; and
at least one memory including computer program code, wherein the computer program code causes the apparatus, when executed with the at least one processor, to:
- perform a timing advance (TA) adjustment during a round trip time (RTT) measurement;
- in response to the TA adjustment exceeding a threshold, provide, to a network node, an indication relating to the RTT measurement.

15. The apparatus of claim 14, wherein the computer program code further causes the apparatus, when executed with the at least one processor, to perform the method of any of claims 2 to 13.
